# DEMANDE DE BREVET EUROPEEN

(11) **EP 2 081 144 A1**
(43) Date de publication de la demande: **22.07.2009**
(21) Numéro de dépôt: 09370001.1
(22) Date de dépôt: 09.01.2009
(51) Int. Cl.: G06Q 30/00

(54) **Système informatisé d'aide à la commercialisation d'articles vestimentaires, notamment cabine d'essayage à réalité augmentée**

(30) Priorité: 11.01.2008 FR 0800155
(71) Demandeur: UNIVERSITE DES SCIENCES ET TECHNOLOGIES DE LILLE, 59655 Villeneuve d'Ascq (FR)
(72) Inventeur: Derycke, Alain, 59650 Villeneuve d'Ascq (FR); van Troys, Thomas, 59493 Villeneuve d'Ascq (FR)
(74) Mandataire: Matkowska, Franck

(57) **Abrégé**

Le système d'aide à la commercialisation d'articles vestimentaires, comportant au moins un écran de visualisation (2), des moyens d'acquisition vidéo (3) pour l'acquisition de l'image d'un utilisateur (P), et des moyens de traitement informatique (4) connectés à l'écran de visualisation et aux moyens d'acquisition vidéo. Les moyens de traitement informatique (4) sont conçus pour réaliser les fonctions suivantes :
- création d'un calque de fond d'image (calque 0) à partir d'au moins une image de fond préenregistrée,
- détourage automatique de l'image de l'utilisateur dans le ou les flux d'informations délivrés par les moyens d'acquisition vidéo (3), et création d'un deuxième calque (calque 1) à partir de l'image détourée de l'utilisateur,
- création d'au moins un troisième calque informationnel (calque 2, ...) à partir d'informations préenregistrées,
- composition d'une image finale fixe par superposition des premier, deuxième et au moins troisième calques,
- affichage de l'image finale sur le ou les écrans de visualisation (2).

## Description

### Domaine technique

La présente invention concerne un nouveau système informatisé d'aide à la commercialisation d'articles vestimentaires, qui est destiné notamment à être implanté sur un lieu de vente (magasins, grandes et moyennes surfaces, ...), et qui permet d'améliorer la présentation et l'offre d'articles vestimentaires pour un utilisateur, et ainsi de favoriser la décision d'achat d'articles vestimentaires par cet utilisateur. De préférence, mais non nécessairement, pour le confort de l'utilisateur, ce système d'aide informatisé comporte une cabine d'essayage à réalité augmentée.

### Art antérieur

Afin de chercher à favoriser la décision d'achat d'articles vestimentaires par un client, les lieux de vente sont de manière usuelle équipés de cabines d'essayage traditionnelles, dans lesquelles le client peut essayer l'article vestimentaire qu'il a préalablement sélectionné sur le lieu de vente, et vérifier si cet article vestimentaire lui convient en regardant son image dans un miroir.

Dans le présent texte, on désigne par « article vestimentaire », tout article destiné à être porté par une personne. De manière non exhaustive, un article vestimentaire est par exemple un vêtement, un sous-vêtement, un article chaussant, ou un accessoire vestimentaire tel que par exemple une paire de lunettes, un foulard, un chapeau, une ceinture, des chaussettes, ....

Ces cabines traditionnelles sont des lieux froids, impersonnels et peu conviviaux, de sorte qu'en dehors de la seule fonctionnalité d'essayage de l'article, elles ne permettent pas d'assister et de guider le client dans sa décision d'achat, ni de promouvoir auprès de ce client d'autres articles vestimentaires susceptibles de l'intéresser. En définitive, l'impact de ces cabines d'essayage traditionnelles sur l'acte d'achat être très faible.

Différentes solutions ont été proposées à ce jour pour améliorer ces cabines d'essayage traditionnelles, en leur conférant des fonctionnalités nouvelles.

Par exemple dans la demande de brevet européen EP-A-1 372 092, il est proposé une cabine d'essayage informatisée et interactive. L'objectif de cette cabine d'essayage est de permettre à un utilisateur de pouvoir facilement comparer deux essayages d'articles vestimentaires effectués dans des lieux de vente différents. A cet effet, dans une variante de réalisation perfectionnée, la cabine d'essayage comporte :
- une caméra permettant de prendre une première image de l'utilisateur portant un article vestimentaire,
- un premier écran sur lequel est affichée cette première image de l'utilisateur prise par la caméra
- des moyens de détection automatique de l'article vestimentaire porté par l'utilisateur,
- des moyens de recherche automatique permettant d'extraire automatiquement d'une base de données une deuxième image de l'utilisateur portant un article vestimentaire similaire ou pouvant être associé avec l'article vestimentaire en cours d'essayage,
- un deuxième écran pour la visualisation de la deuxième image de l'utilisateur.

Dans une variante de réalisation plus simple, la caméra et le premier écran de visualisation sont remplacés par un miroir.

Cette solution technique de cabine d'essayage interactive constitue une amélioration par rapport aux cabines d'essayage traditionnelles. Néanmoins, l'information délivrée à l'utilisateur se limite à des articles qu'il a déjà essayé et pour lesquels une image à été précédemment acquise lors d'un essayage précédent, ce qui limite les possibilités de cette cabine d'essayage. En outre, cette solution ne permet pas de rendre la cabine d'essayage plus accueillante pour l'usager et de rendre l'essayage plus agréable.

Dans la demande de brevet européen EP-A-1 372 092, il est proposé une cabine d'essayage informatisée et interactive, dont l'un des objectifs est de permettre de collecter automatiquement des informations sur les articles essayés par les clients du lieu de vente. Cette cabine d'essayage comporte des caméras CCD permettant de prendre une image complète d'un utilisateur de la tête au pied, un écran sur lequel est affichée l'image de l'utilisateur portant l'article vestimentaire, des moyens d'identification automatique de l'article vestimentaire porté par l'utilisateur (par exemple lecteur RFID permettant de lire une étiquette RFID fixée au vêtement), des moyens de traitement informatique, qui permettent de collecter l'information d'identification de l'article vestimentaire envoyée par les moyens d'identification automatique, et de prévoir le potentiel de vente de chaque article vestimentaire.

Cette solution est intéressante, car elle permet au gestionnaire du lieu de vente de connaître automatiquement les articles les plus essayés, et d'avoir une évaluation du potentiel d'attraction de chaque article présenté à la vente. Cette solution ne permet pas de favoriser la décision d'achat pour l'utilisateur, ni d'inciter l'utilisateur à acheter d'autres articles proposés à la vente. Cette solution ne permet pas en outre de rendre la cabine d'essayage plus accueillante pour l'usager et de rendre l'essayage plus agréable.

Pour inciter un client à acheter des articles vestimentaires, et l'assister dans son choix, on a déjà proposé dans la demande de brevet internationale WO 02/17160 une solution informatisée de recommandation automatique d'articles vestimentaires. Dans cette solution, les articles vestimentaires sont identifiés par des étiquettes électroniques de type RFID, et stockés dans une armoire ou penderie, et le système de recommandation comporte :
- des moyens de détection et d'identification (lecteur RFID) d'un article vestimentaire pris par un utilisateur dans une armoire ou penderie,
- des moyens informatiques permettant de retrouver automatiquement dans une base de données des articles vestimentaires supplémentaires conseillés à l'utilisateur, compte tenu du choix d'article qu'il a effectué,
- un écran de visualisation sur lequel sont affichés les recommandations d'achat de ces articles supplémentaires, par exemple sous la forme de mannequins virtuels avec le cas échéant la tête de l'utilisateur.

Cette solution est intéressante, car elle fournit automatiquement au client des informations sur d'autres articles susceptibles de l'intéresser, ce qui favorise l'achat de ces autres articles. Cependant, la mise en oeuvre de mannequins virtuels n'est pas satisfaisante, car elle ne remplace pas l'expérience multisensorielle d'un véritable essayage. En outre, ces mannequins virtuels sont des modèles préenregistrés ne correspondant pas à la morphologie de l'utilisateur, ce qui ne permet pas à l'utilisateur de réellement apprécier si l'article vestimentaire lui convient.

Par ailleurs, des solutions d'habillage virtuel basées sur des mécanismes de reconnaissance de forme pour habiller virtuellement une image d'un utilisateur acquise au moyen de caméras, ont déjà été essayées à ce jour. Ce type d'approche est décrit par exemple dans la demande de brevet américain US 2003/0101105. Cependant, d'une part les traitements informatiques nécessaires sont lourds, et inadaptés à une mise oeuvre en temps réel et à faible coût. En outre, des études comportementales ont montré qu'il était préférable pour l'achat d'un article vestimentaire, en particulier les articles vestimentaires de très bonne qualité, qu'une expérience multisensorielle de cet article, incluant au moins le toucher, soit effectuée par le client. En d'autres termes, un des facteurs incitatifs important pour l'acte d'achat d'un article vestimentaire est le toucher de cet article, ce qui rend aujourd'hui toutes les approches basées sur un habillage virtuel peu efficaces pour favoriser la décision d'achat.

### Objectifs de l'invention

La présente invention a pour objectif de proposer un nouveau système informatisé d'aide à la commercialisation d'articles vestimentaires, qui permet de résoudre les problèmes techniques suivants :
- pouvoir communiquer en temps réel, à un utilisateur qui essaie un article vestimentaire, des informations sur cet article vestimentaire ou sur des articles associés de manière à ce que cet utilisateur puisse appréhender ces informations de manière simple et rapide en cours d'essayage,
- rendre les conditions d'essayage d'articles vestimentaires plus agréables pour l'utilisateur,
- permettre une création et une mise à jour rapides et simplifiées des données du système, de telle sorte que d'une part que ce système peut être facilement configuré et adapté pour des lieux de vente différents et/ou des articles vestimentaires de types différents, et d'autre part que ce système peut facilement être déployé dans un nombre important de lieux de vente.

### Résumé de l'invention

L'invention a ainsi pour objet un système d'aide à la commercialisation d'articles vestimentaires, qui comporte les caractéristiques suivantes décrites notamment de la publication précitée EP-A-1 372 092 : il comporte au moins un écran de visualisation, des moyens d'acquisition vidéo pour l'acquisition de l'image d'un utilisateur, et des moyens de traitement informatique connectés à l'écran de visualisation et aux moyens d'acquisition vidéo.

De manière caractéristique selon l'invention, les moyens de traitement informatique sont conçus pour réaliser les fonctions suivantes :
- création d'un calque de fond d'image (calque 0) à partir d'au moins une image de fond préenregistrée,
- détourage automatique de l'image de l'utilisateur dans le ou les flux d'informations délivrés par les moyens d'acquisition vidéo, et création d'un deuxième calque (calque 1) à partir de l'image détourée de l'utilisateur,
- création d'au moins un troisième calque informationnel (calque 2, ...) à partir d'informations préenregistrées,
- composition d'une image finale fixe par superposition des premier, deuxième et au moins troisième calques,
- affichage de l'image finale sur le ou les écrans de visualisation.

La création du premier calque (encore appelé « layer ») permet avantageusement de remplacer l'arrière plan dans l'image finale par un décor de synthèse, qui est plus agréable que le décor réel capturé par la caméra, Cela permet une meilleure mise en valeur de l'article vestimentaire porté et permet de rendre les conditions d'essayage d'articles vestimentaires plus agréables et plus attractives pour l'utilisateur. Cet arrière plan de synthèse peut en outre avantageusement être sélectionné de manière automatique, afin de correspondre au mieux à l'article vestimentaire essayé par l'utilisateur. Par exemple, Cet arrière plan de synthèse peut être l'image d'un paysage de montagne enneigé lorsque l'article vestimentaire est un vêtement d'hiver, ou une image de plage ensoleillée lorsque l'article vestimentaire est un vêtement d'été.

La création du deuxième claque permet d'obtenir un rendu visuel exact de l'utilisateur portant l'article vestimentaire.

La création d'un ou plusieurs calques informationnels (troisème calque, quatrième calque, ...) permet de communiquer facilement à l'utilisateur des informations complémentaires, non seulement sur l'article en cours d'essayage, mais également et surtout sur d'autres articles disponibles et susceptibles de suivre avec l'article essayé. Par exemple si l'article essayé est une robe, on peut afficher sur ce troisième calque des images de colliers ou de chaussures susceptibles d'être portés avec cette robe, ce qui permet de promouvoir à la vente, auprès de cet utilisateur, des articles supplémentaires disponibles sur le lieu de vente où il se trouve.

La superposition du ou des calques informationnels avec les premier et deuxième calques de manière à composer une image finale affichée sur un écran de visualisation permet avantageusement de communiquer à l'utilisateur en temps réel des informations sur l'article vestimentaire essayé ou sur des articles associés, de telle sorte que cet utilisateur peut avantageusement appréhender ces informations de manière simple, rapide et attractive en cours d'essayage.

La structuration et l'affichage des données sous forme de calques superposés permet avantageusement de simplifier la gestion de ces données, et notamment la création de ces données et leur mise à jour. En effet, les données des calques informationnels (troisième calque, quatrième calque, ... ) peuvent avantageusement être enregistrées dans une base de données et gérées indépendamment des données du premier calque qui sont relatives aux arrière plans de synthèse dans l'image finale Ainsi, la création et la mise à jour des différent décors de synthèse peuventt facilement être confiées à au moins un premier éditeur de contenu, et la création et la mise à jour des données informationnelles sur les articles proposés à la vente peuvent être confiées facilement et indépendamment à au moins un deuxième éditeur de contenu. La seule contrainte de chaque éditeur de contenu est de respecter le format de calque. En pratique le ou les éditeurs de contenu pour les fonds d'image préenregistrées seront différents du ou des éditeurs de contenu relatif aux données informationnelles sur les articles proposés à la vente.

Il en résulte que le système est facilement configurable et adaptable pour des lieux de vente différents et/ou des articles vestimentaires de types différents, et qu'il peut facilement être déployé dans un nombre important de lieux de vente.

L'invention offre ainsi la possibilité aux différents hommes de métiers (installateurs techniques, spécialistes du marketing, exploitants locaux dans le magasin) de mettre à jour facilement des contenus d'information qui les concernent sans connaissance préalable de la structure globale du système d'information sous jacent, en agissant seulement sur les éléments de la couche (matérialisée par les calques) les concernant. Cette approche modulaire permet avantageusement un abaissement significatif des coûts d'exploitation.

Enfin, la solution de l'invention implique la mise en oeuvre de traitements informatiques temps réels qui sont moins onéreux que les traitements informatiques des solutions d'habillage virtuel précitées de l'art antérieur, et est néanmoins plus efficace pour favoriser la décision d'achat de l'utilisateur.

De préférence, afin de rendre le système plus facilement adaptable à des lieux de vente présentant notamment des configurations géométriques différentes, ce qui contribue à rendre encore plus simple le déploiement du système dans des lieux de vente différents, le système présente les caractéristiques additionnelles suivantes permettant un auto-calibrage. Il comporte des marques visuelles délimitant une zone de cadrage, et les moyens de traitement informatique sont conçus d'une part pour effectuer un auto-calibrage en réalisant les fonctions suivantes :
- détection des marques visuelles dans le ou les flux d'informations délivrés par les moyens d'acquisition vidéo,
- calcul de la zone de cadrage (ZC) à partir des distances connues entre les marques,
et d'autre part pour traiter (« clipping »), dans le ou les flux vidéos délivrés par les moyens d'acquisition vidéo, uniquement les informations contenues dans la zone de cadrage.

Plus particulièrement, dans une variante de réalisation, les moyens de traitement informatique comportent une base de données dans laquelle sont enregistrées, en relation avec des informations d'identification d'articles vestimentaires, les informations susceptibles d'être utilisées pour la création dudit moins troisième calque informationnel (calque 2,calque 3,...) ; le système comporte des moyens de sélection ou d'identification d'un ou plusieurs articles vestimentaires, qui sont en communication avec les moyens de traitement informatique. Ces moyens de sélection ou d'identification peuvent être de natures diverses. Ils peuvent par exemple comporter un lecteur RFID permettant de lire des informations d'identifications stockées dans une étiquette RFID fixée sur l'article vestimentaire. Dans une variante plus simple, ces moyens de sélection ou d'identification peuvent comporter une interface, de type clavier, permettant à un utilisateur de saisir manuellement une information d'identification d'un article, ou de sélectionner manuellement un article affiché sur un écran de visualisation. Ces moyens de sélection ou d'identification permettent d'envoyer aux moyens de traitement informatique une ou plusieurs informations d'identification identifiant un ou plusieurs articles vestimentaires choisis par l'utilisateur du système, et les moyens de traitement informatique sont conçus pour récupérer dans la base de données (DB) les informations préenregistrées en relation avec lesdites informations d'identification, afin de créer ledit au moins troisième calque informationnel.

Le système de l'invention comporte de préférence une enceinte fermée, de type cabine d'essayage, dans laquelle l'utilisateur peut se changer, et le ou les écrans de visualisation, les moyens d'acquisition vidéo, la paroi de fond et le cas échéant les moyens de sélection ou d'identification, sont situés à l'intérieur de cette enceinte.

Plus particulièrement, mais non nécessairement, les moyens d'acquisition vidéo et le ou les écrans de visualisation sont adaptés pour permettre l'acquisition et l'affichage d'une image d'un utilisateur de la tête au pied.

Plus particulièrement, mais non nécessairement, le système comprend deux écrans de visualisation superposés, et les moyens d'acquisition vidéo comportent au moins une caméra positionnée dans l'espace entre les deux écrans.

Plus particulièrement, mais non nécessairement, chaque écran de visualisation est orienté verticalement et les moyens de traitement informatique sont programmés pour effectuer une rotation de 90° de l'image d'un utilisateur acquise par les moyens d'acquisition vidéo.

Plus particulièrement, mais non nécessairement chaque écran de visualisation peut également faire office de miroir.

### Brève description des figures

D'autres caractéristiques et avantages de l'invention apparaîtront plus clairement à la lecture de la description détaillée ci-après d'une variante de réalisation d'une cabine d'essayage informatisée à réalité augmentée, laquelle description détaillé est donnée à titre d'exemple non limitatif et non exhaustif de l'invention, et en référence aux dessins annexées sur lesquels :
- la figure 1 est une vue schématique de dessus d'un exemple de cabine d'essayage conforme à l'invention,
- la figure 2 est une vue de face du dispositif de miroir augmenté équipant la cabine de la figure 1,
- la figure 3 est une vue de côté du dispositif de miroir augmenté,
- la figure 4 est un schéma fonctionnel représentant les principaux modules du système de traitement informatique de la cabine,
- la figure 5 est une vue de face de la paroi de fond de la cabine faisant face aux caméras,
- la figure 6 est un exemple de marque visuelle de la paroi de fond pouvant être utilisée pour les opérations d'auto-calibrage,
- la figure 7 est un organigramme fonctionnel du module de traitement (M402) dit de caméra virtuelle,
- la figure 8 un organigramme fonctionnel du module (M403) de composition de l'image finale

### Description détaillée

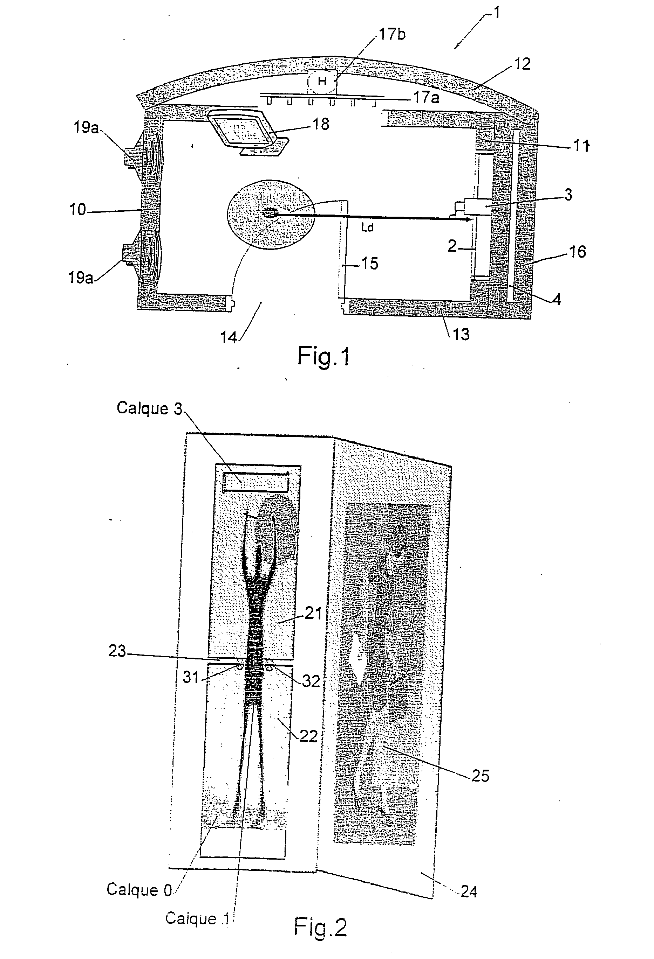

On a représenté sur la figure 1, en vue de dessus, une variante particulière de réalisation d'un système d'aide à la commercialisation d'articles vestimentaires, qui est conforme à l'invention, et qui destiné à être implanté par exemple sur un lieu de vente tel qu'un magasin, ou une grande ou moyenne surface. Dans cette variante particulière de réalisation; ce système d'aide à la commercialisation d'articles vestimentaires comprend une enceinte fermée 1, de type cabine d'essayage, dans laquelle un utilisateur peut se changer et essayer un ou plusieurs articles vestimentaires. Cette enceinte fermée comporte une paroi de fond 10, une paroi avant 11 et deux parois latérales 12, 13. Dans la paroi latérale 13 est ménagé un accès 14, qui permet à l'utilisateur de pénétrer dans l'enceinte 1, et qui peut être fermé par une porte 15.

Sur la paroi avant 11 opposée à la paroi de fond 10 sont fixés un dispositif 2 dit de miroir augmenté, et des moyens d'acquisition vidéo 3.

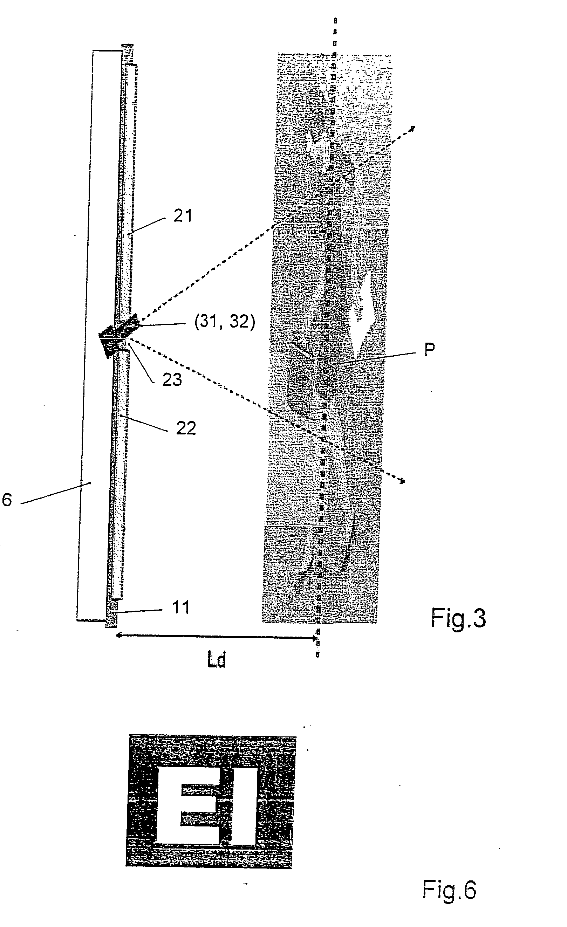

En référence aux figures 2 et 3, dans une variante particulière de réalisation, le dispositif de miroir augmenté 2 comporte par exemple un écran de visualisation haut 21 et un écran de visualisation bas 22 séparés par un faible espace 23. Les écrans 21 et 22 sont par exemple des écrans LCD ou plasma au format 16/9. La hauteur totale H1 et la largeur totale L1 des écrans 21 et 22 sont suffisantes pour permettre l'affichage en taille réelle d'un utilisateur de la tête au pied. Plus particulièrement, lorsque les deux écrans 21,22 sont au format 16/9 et sont orientés verticalement selon la configuration de la figure 2, l'affichage de l'image de l'utilisateur sur ces deux écrans 21, 22 nécessite un traitement préalable de l'image de l'utilisateur consistant en une rotation de l'image de 90°.

L'invention n'est toutefois pas limitée à la mise en oeuvre de deux écrans superposés. Dans d'autres variantes, on pourrait remplacer les deux écrans 21 et 22 par un unique écran de plus grande dimension, ou par plus de deux écrans superposés, ou par un seul écran permettant d'afficher en taille réelle une partie seulement du corps d'un utilisateur.

De manière facultative, le dispositif de miroir augmenté 2 comporte également un miroir ordinaire 24, positionné à coté des écrans de visualisations 21,22 et dans lequel un utilisateur peut voir son reflet réel 25. Dans une autre variante, les écrans 21, 22 pourraient également faire office de miroir.

Dans la variante particulière de réalisation de la figure 2, les moyens d'acquisition vidéo 3 comportent deux caméras 31 et 32 identiques, telles que par exemple des caméras CCD grand angle, qui sont disposées dans l'espace 23 entre les deux écrans 21,22.

Les écrans 21, 22 et les caméras 31, 32 sont connectés à un système de traitement informatique 4, qui est par exemple logé dans un emplacement protégé 16 ( figure 1) prévu derrière la paroi 11 recevant les écrans 21, 22 et les caméras 31, 32.

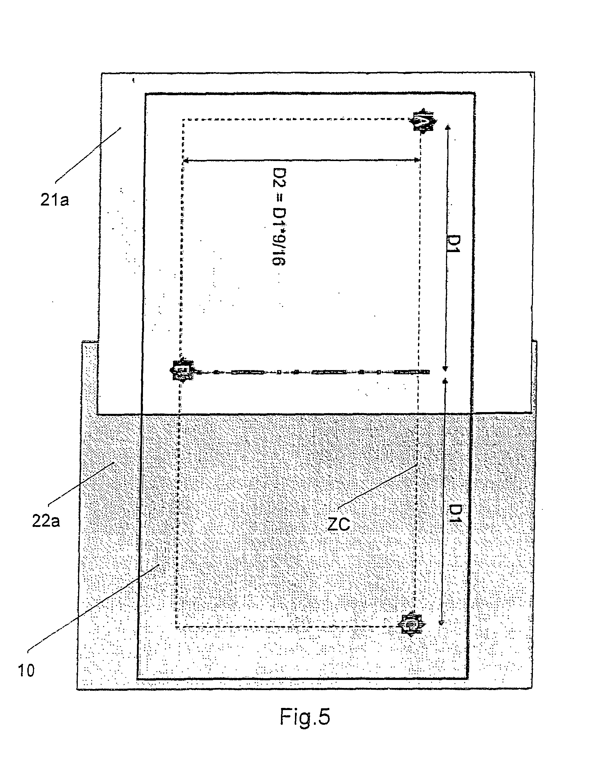

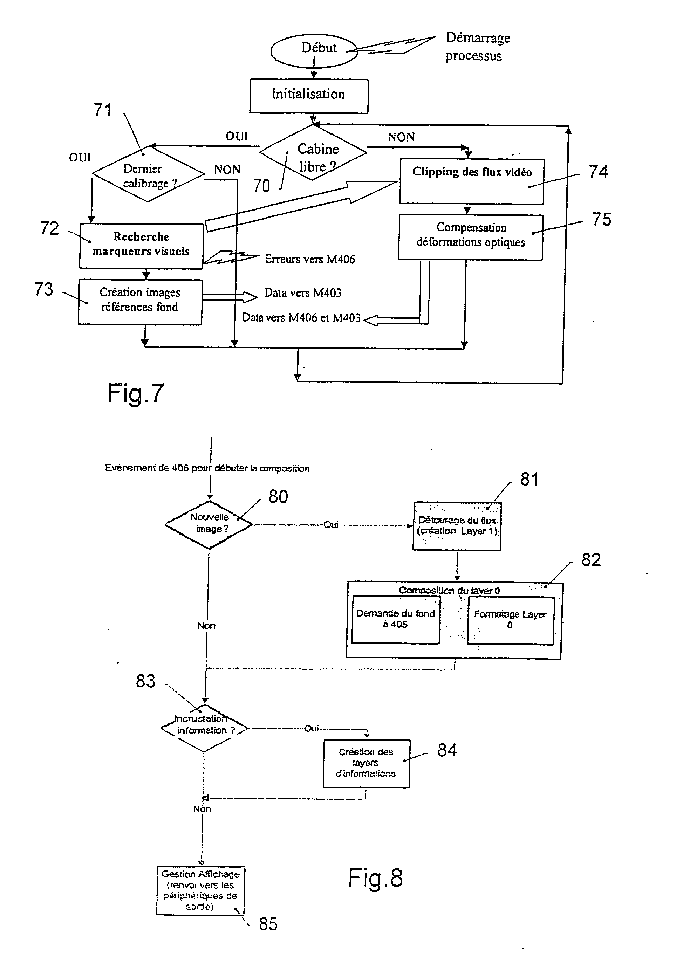

La paroi de fond 10, qui fait face aux caméras 31, 32 présente une surface dont la couleur et la texture sont choisies en sorte de faciliter le détourage, par le système de traitement informatique, de l'image animée de l'utilisateur (figure 8/ étape 81). Cette paroi de fond comporte également des marques A,B,C possédant une signature électronique unique et délimitant le champ optimal de saisi de l'image (figure 5/ zone de cadrage ZC)

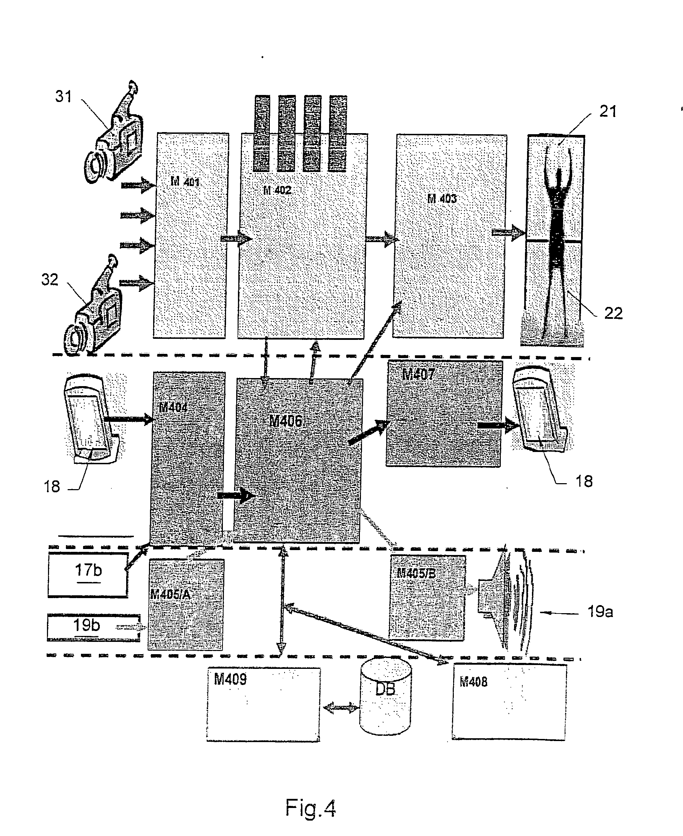

De manière optionnelle selon l'invention, le système d'aide à la commercialisation d'articles vestimentaires comprend les moyens techniques supplémentaires suivants :
- un support 17a d'articles vestimentaires, de type support de cintre ou patère ;
- un lecteur sans contact 17b d'étiquettes RFID associé au support 17a, et apte détecter uniquement les articles vestimentaires présents dans l'enceinte 1, et de préférence positionnés sur le support 17a, sans qu'il y ait d'interaction avec d'autres articles vestimentaires externes à l'enceinte 1 ; ce lecteur 17b est connecté (liaison filaire ou sans fil) au système de traitement informatique 4 et permet d'envoyer au module M406, une ou plusieurs informations d'identification identifiant un ou plusieurs articles vestimentaires choisis par l'utilisateur du système ;
- une interface de communication 18, de type par exemple écran tactile ; cette interface de communication 18 est connectée (liaison filaire ou sans fil) au système de traitement informatique 4, permet d'afficher pour l'utilisateur des éléments textuels de dialogue, et permet à l'utilisateur de saisir des données ou commandes ; l'interface de communication 18 peut également comporter un lecteur de cartes standards à piste magnétique, ou de cartes à puce (cartes de fidélités ou cartes bancaires) ; l'écran tactile peut par exemple être remplacé par tout autre type d'interface de communication permettant à l'utilisateur d'interagir et de dialoguer avec le système de traitement informatique 4, et par exemple par un système de communication portable de type Assistant Personnel Digital (PDA) pouvant communiquer à distance et sans fil avec le système le système de traitement informatique 4 ;
- une interface de communication vocale connectée (liaison filaire ou sans fil) au système de traitement informatique 4 et comportant un ou plusieurs haut-parleurs 19a fixés par exemple sur la paroi de fond 10, des moyens de synthèse vocale (M405/B), et éventuellement un microphone 19b (figure 4) associé à des moyens de reconnaissance vocale (M405/A).

Sur les figures 1 et 3, la distance Ld symbolise la distance qui sépare le dispositif de miroir augmenté 2 d'un utilisateur P de la cabine (figure 3). Il existe une zone optimale de fonctionnement, qui peut par exemple être matérialisée au sol par une signalétique appropriée.

On a représenté sur la figure 4 les principaux modules de traitement du système de traitement informatique 4 :
M401 : Module d'acquisition des signaux vidéos des caméras 31, 32
M402 : Module, dit de caméra virtuelle, qui sera détaillé ultérieurement
M403 : Module de composition de l'image finale (superposition des calques) sur les écrans 31,32.
M404 : Module de gestion des entrées de l'interface de communication 18 (écran tactile) et du lecteur RFID 17b.
M405A : Module de reconnaissance vocale associé à un microphone 19b.
M405B : Module de synthèse vocale et sonore pour la restitution sonore sur les haut-parleurs 19a.
M406: Module de gestion du dialogue interactif multimodal entre un utilisateur et le système de traitement informatique
M407 : Module de gestion de l'écran de l'interface de communication 18 pour le dialogue avec l'utilisateur.
M408 : Module de liaison avec un système informatique externe et déporté
M409 : Module de gestion de documents associé à une base de données (DB) pour le stockage d'images et de flux vidéo.

La base de données (DB) associée à ce module M409 comporte par exemple en mémoire plusieurs décors de fond préenregistrés, qui sont destinés à être utilisés par le module M403 (composition de l'image finale) lors de la création du calque 0 correspondant au fond de l'image finale, ce qui permet par exemple de restituer à l'utilisateur sur les écrans 31,32 des ambiances différentes (par exemple paysage de montagne enneigé, paysage de plage ensoleillée,....) en fonction notamment du type d'article vestimentaire essayé par l'utilisateur.

Dans cette base de donnée DB sont également enregistrées, en relation avec des informations d'identification d'articles vestimentaires, les informations susceptibles d'être utilisées pour la création des calques informationnels (calque 2, calque 3,...).

Cette architecture modulaire des moyens de traitement informatique 4 permet avantageusement un enrichissement progressif des fonctionnalités fournies tant à l'utilisateur (le client potentiel) qu'aux responsables des lieux de vente (exploitation et gestion plus fine) et une intégration des vendeurs dans la dynamique de vente enclenchée par l'usage du dispositif. Elle permet également de rendre le système d'aide à la commercialisation extensible dynamiquement, et ouvert sur les applications de gestion commerciales du lieu de vente.

Les modules M402, M403 et M406 vont à présent être détaillés.
M402 : Module M402 de caméra virtuelle / Figure 7
Entrées du module :
- il reçoit du module M401 plusieurs flux vidéo normalisés (un flux par caméra) ;
- il reçoit du module M406 des flux de contrôle et de supervision en fonction de l'interaction avec l'utilisateur ; L'état occupé ou libre de la cabine d'essayage est ainsi connu du module M402 (figure 7/test 70).
Sorties du module :
- Il envoie au module M406 des éléments de contrôle (états du module M402)
- Il envoie au module M403 des flux vidéos résultant de l'étape de « clipping » 74 (figurez 7)

On a représenté sur la figure 7, un exemple d'organigramme simplifié de traitement exécuté automatiquement par ce module de caméra virtuelle M402.

Lorsque la cabine d'essayage 1 est libre (test 70), et (test 71) lorsqu'un calibrage des caméras 21,22 est nécessaire (premier calibrage ou recalibrage demandé par le module M406), le module exécute des opérations dites d'auto-calibrage (étapes 72 et 73), qui permettent notamment de prendre en compte automatiquement la distance Ld entre un utilisateur et les caméras 21, 22, et de ce fait de s'affranchir des dimensions de la cabine d'essayage 1 (notamment de la distance entre la paroi de fond 10 et les caméras 21,22).

### Etape 72 :

En référence à la figure 5, on a représenté un exemple de panneau de fond 10 comportant trois marques A, B, C permettant de définir une zone de cadrage rectangulaire ZC délimitée par des pointillés fictifs.

L'étape 72 consiste à effectuer un seuillage noir et blanc des flux vidéos délivrés par les caméras 21, 22, à détecter automatiquement les signatures numériques des marques visuelles passives (A, B, C) portées par le panneau de fond 10 de la cabine d'essayage 1, à déterminer dans les flux vidéos les points fixes correspondant à ces marques, et à déterminer à partir de la zone de cadrage ZC les dimensions du cadre de bornage utilisé pour les opérations de bornage (« clipping) de l'étape 74.

Dans une autre variante de réalisation, on pourrait utiliser un plus grand nombre de maques, et la zone de cadrage ZC n'est pas nécessairement rectangulaire. Sur la figure 5, les cadres 21a et 22a symbolisent respectivement les champs des caméras 21 et 22. Les distances entre les marques A, B et C sont connues et fixes, quelles que soient les dimensions de la cabine d'essayage 1, et notamment quelle que soit la profondeur de la cabine (distance antre les caméras 21, 22 et le panneau de fond 10). Le rapport entre les dimensions D1 et D2 est choisie en sorte d'être compatible avec les dimensions des écrans de visualisation 31, 32. Par exemple lorsque les écrans de visualisation 31, 32 sont des écrans au format 16/9, le rapport entre D1 et D2 est également de 16/9 (D1=D2x16/9).

On a représenté sur la figure 6 un exemple particulier de marque visuelle passive, se présentant par exemple sous la forme d'un autocollant appliqué sur le panneau de fond 10. On peut d'une manière générale utiliser toute marque passive possédant une signature numérique singulière permettant sa détection automatique dans un flux vidéo, l'invention n'étant pas limitée à la géométrie particulière de la marque illustrée sur la figure 6.

Les opérations de calibrage automatique précitées (étapes 72 et 73) utilisant des marques visuelles permet avantageusement une saisie de l'image de l'utilisateur en pied, malgré le faible recul lié aux dimensions admissibles pour une cabine d'essayage, tout en utilisant par exemple plusieurs caméras ordinaires (faible résolution, faibles coûts) avec des optiques ordinaires (faibles déformations de l'image comparées à un grand angle). En particulier, la mise en oeuvre d'un calibrage multizone facilite le raccordement des images de chaque caméra pour composer l'image finale (second calque) avec beaucoup moins de calcul que dans le cas d'une caméra plus haute définition et d'une correction des distorsions apportées par l'optique grand angle.

### Etapes 73 :

Le module établit une ou plusieurs images de référence du fond 10 qui sont envoyées au module de composition d'image M403, et qui sont destinées à être utilisées par l'algorithme de détourage (étape 81).

En référence à la figure 7, lorsque la cabine d'essayage 1 est occupée (test 70), le module de caméra virtuelle M402 exécute les étapes 74 et 75 de manière itérative, tant que la cabine d'essayage est occupée.

### Etape 74 :

Cette étape de bornage, plus communément dite « clipping », consiste à extraire et traiter dans les flux vidéos des caméras 21,22 uniquement les informations comprises dans la zone de bornage précitée dont les dimensions ont été calculées à l'étape 72 à partir de la zone de calibrage ZC.

### Etape 75 :

Le module de caméra virtuelle M402 effectue une correction d'image automatique pour compenser les déformations optiques liées à l'optique des caméras. Cette correction automatique est connue en soi.

A l'issue de l'étape 75, les flux vidéo délivrés par les caméras 21,22 et bornés dans la zone de cadrage ZC sont envoyés aux modules M406 et M403.
M403 : Module de composition de l'image finale / Figure 8
Entrées du module :
- il reçoit du module M402 (camera virtuelle), les flux vidéo délivrés par les caméras 21,22 et bornés dans la zone de cadrage ZC
- il reçoit du module M406 des flux de contrôle et de supervision incluant des informations sur la composition de l'image finale ;
Sorties du module :
- Il envoie vers les écrans 31, 32 l'image finale résultant de la superposition des différents calques.

On a représenté sur la figure 8, un exemple d'organigramme simplifié de traitement exécuté automatiquement par ce module M403.

Le processus de composition d'image de l'organigramme de la figure 8 est initié par le module M406. Le principe de composition d'image mis en oeuvre consiste à créer les différents calques (encore communément désignés « layers ») et à les superposer afin de former l'image finale (utilisation des technologies connues dites de « z-buffering »).

Dans un premier temps, en fonction du flux de contrôle envoyé par le module M406, le module M403 évalue (test 80) s'il est nécessaire ou non de réaliser un changement de l'image finale affichée sur les écrans 31,32.

Dans l'affirmative, le module M403 effectue à l'étape 81 un détourage automatique de l'image animée de la personne détectée dans les flux vidéos bornés des caméras 21,22 afin de ne conserver qu'une image statique de la personne et de constituer le calque 1.

Ensuite (étape 82), le module M403 demande au module M406 les informations nécessaires concernant le décor synthèse de fond (comme par exemple la localisation de ce décor de fond dans le module M409 et/ou le module M408), et compose le calque 0 correspondant à ce décor de fond.

Ensuite, le module M403 évalue (test 83), à partir des informations délivrées par le module M406, si des informations supplémentaires doivent être incrustées dans l'image finale, telles que par exemple : promotions en cours, taille du vêtement essayé, .... Dans l'affirmative (étape 84), le module M403 crée un ou plusieurs calques informationnels (calques 3, 4,....) à partir des informations provenant du module M406. A chaque type d'information correspond un calque informationnel.

Enfin, l'image finale composée par la superposition des différents calques (calque 0 : décor de fond / calque 1 : image de l'utilisateur de la cabine/calque 2: informations/...) est envoyée vers les périphériques de sorties, et notamment vers les écrans 31, 32 en vue d'être affichée pour l'utilisateur. On a représenté sur la figure 2 un exemple d'image finale composée de trois calques 0 à 2.

### M406 : Module de gestion du dialogue interactif multimodal

Ce module est le « chef d'orchestre » du fonctionnement de toute la cabine d'essayage.
Entrées du module :
- il reçoit les informations en provenance du module M402 (camera virtuelle),
- il reçoit les informations en provenance du module M403 (composition de l'image finale),
- il reçoit les interactions des utilisateurs de la cabine envoyées par le module M404 (gestion des entrées tactiles et lecteur RFID) et par le module M405/A (reconnaissance vocale),
- il reçoit les informations en provenance du module M409 (gestion des documents multimédia) et M408. Sorties du module :

- Il envoie un flux de contrôle vers le module M402 (caméra virtuelle),
- Il envoie un flux de contrôle vers le module M403 (composition de l'image finale),
- Il envoie un flux de contrôle et d'informations pour l'interaction avec l'utilisateur de la cabine vers les modules M407 (gestion des écrans de dialogue) et M405/B (synthèse vocale),

Un exemple de fonctionnement du module M406 est le suivant.

La première étape de fonctionnement consiste à initialiser tous les modules de la cabine avec les paramètres initiaux de la cabine. Ensuite le fonctionnement du module M406 repose sur un principe de fonctionnement de type événementiel: pour chaque événement reçu, un ou plusieurs processus est exécuté.

Plus particulièrement, lors de la détection d'une présence dans la cabine d'essayage (par exemple au moyen du lecteur RFID 17b détectant un article vestimentaire sur le support 17a ou d'un capteur de présence relié au système de traitement informatique 4), le module M406 envoie notamment au module M407 la liste des articles présents dans la cabine qui ont été détectés automatiquement au moyen d'u lecteur RFID, afin que le module M407 puisse afficher pour l'utilisateur les écrans de dialogue appropriés correspondant à ces articles (prix, offres promotionnelles, autres articles susceptibles de suivre avec le ou les articles choisis par l'utilisateur,...).

Le module M406 est également programmé pour récupérer dans la base de données (DB) les informations préenregistrées en relation avec les informations d'identification du ou des articles détectées par le lecteur RFID 17b, et pour communiquer ces informations au module M403 en vue de la création du ou des calques informationnels (calque 2, et le cas échéant calque 3, calque 4,...).

Le module M406 récupère les différentes actions des usager via les modules M404 et M405/A, ce qui lui permet de s'adapte en continu à l'utilisateur (utilisation par exemple d'une base de règles pour déterminer les meilleures actions à réaliser).

Le module M406 peut également être conçu pour prendre automatiquement la décision, à partir du flux vidéo provenant du module 402, d'un recalibrage de la vidéo (déclenchement des étapes 72 et 73 par le module M402).

Le module M406 peut également être programmé pour, en lien avec le module M403, sélectionner parmi les décors de fond disponibles, le décor de fond (calque 0) le plus approprié devant être utilisé lors de la composition de l'image fond par le module M403, ainsi que l'ambiance sonore appropriée associée (modules M405/B).

L'invention n'est pas limitée à l'exemple particulier de réalisation qui a été décrit en référence aux figures annexées, mais s'étend à tout système d'aide à la commercialisation d'articles vestimentaires tel que défini dans la revendication principale annexée. En particulier, on notera que la mise en oeuvre d'une enceinte fermée 1, de type cabine d'essayage, est préférable pour le confort de l'utilisateur, mais néanmoins n'est pas indispensable. Il suffit notamment pour les besoins de l'acquisition vidéo de mettre en oeuvre, face à la caméra ou aux caméras, des marques visuelles ou équivalent facilitant le détourage dans le ou les flux vidéos de l'image animée de l'utilisateur. Les marques visuelles (A, B,C,...) utilisées ne sont pas nécessairement passives, mais peuvent être des marques actives telles que par exemple des éléments lumineux ponctuels, de type diodes électroluminescentes ; dans ce cas, afin de faciliter le détourage, les diodes électroluminescentes peuvent être alimentés de manière à produire des impulsions lumineuses.

## Revendications

1. Système d'aide à la commercialisation d'articles vestimentaires, comportant au moins un écran de visualisation (21,22), des moyens d'acquisition vidéo (3) pour l'acquisition de l'image d'un utilisateur (P), et des moyens de traitement informatique (4) connectés à l'écran de visualisation et aux moyens d'acquisition vidéo, **caractérisé en ce que** les moyens de traitement informatique (4) sont conçus pour réaliser les fonctions suivantes :
- création d'un calque de fond d'image (calque 0) à partir d'au moins une image de fond préenregistrée,
- détourage automatique de l'image de l'utilisateur dans le ou les flux d'informations délivrés par les moyens d'acquisition vidéo (3), et création d'un deuxième calque (calque 1) à partir de l'image détourée de l'utilisateur,
- création d'au moins un troisième calque informationnel (calque 2, ...) à partir d'informations préenregistrées,
- composition d'une image finale fixe par superposition des premier, deuxième et au moins troisième calques,
- affichage de l'image finale sur le ou les écrans de visualisation (21,22).

2. Système selon la revendication 1, **caractérisé en ce qu'**il comporte des marques visuelles (A,B,C) délimitant une zone de cadrage (ZC), **en ce que** les moyens de traitement informatique (4) sont conçus d'une part pour effectuer un auto-calibrage en réalisant les fonctions suivantes :
- détection des marques visuelles dans le ou les flux d'informations délivrés par les moyens d'acquisition vidéo (3),
- calcul de la zone de cadrage (ZC) à partir des distances connues entre les marques,
et d'autre part pour traiter (« clipping »), dans le ou les flux vidéos délivrés par les moyens d'acquisition vidéo (3), uniquement les informations contenues dans la zone de cadrage (ZC).

3. Système selon l'une des revendications 1 ou 2, **caractérisé en ce que** les moyens de traitement informatique comportent une base de données (DB) dans laquelle sont enregistrées, en relation avec des informations d'identification d'articles vestimentaires, les informations susceptibles d'être utilisées pour la création dudit moins troisième calque informationnel (calque 2,calque 3,...), et **en ce que** le système comporte des moyens (17b) de sélection ou d'identification d'un ou plusieurs articles vestimentaires, qui sont en communication avec les moyens de traitement informatique (4), et qui permettent d'envoyer aux moyens de traitement informatique (4, M406) une ou plusieurs informations d'identification identifiant un ou plusieurs articles vestimentaires choisis par l'utilisateur du système, et **en ce que** les moyens de traitement informatique (4, M406) sont conçus pour récupérer dans la base de données (DB) les informations préenregistrées en relation avec lesdites informations d'identification, afin de créer ledit au moins troisième calque informationnel.

4. Système selon l'une des revendications 1 à 3, **caractérisé en ce qu'**il comporte une enceinte fermée (1) dans laquelle l'utilisateur peut se changer, et **en ce que** le ou les écrans de visualisation (21,22), les moyens d'acquisition vidéo (3), la paroi de fond (10) et le cas échéant les moyens de sélection ou d'identification, sont situés à l'intérieur de cette enceinte.

5. Système selon l'une des revendications 1 à 4, **caractérisé en ce que** les moyens d'acquisition vidéo (3) et le ou les écrans de visualisation (21,22) sont adaptés pour permettre l'acquisition et l'affichage d'une image d'un utilisateur de la tête au pied.

6. Système selon l'une des revendications 1 à 5, **caractérisé en ce qu'**il comprend deux écrans de visualisation (31, 22) superposés, et **en ce que** les moyens d'acquisition vidéo (3) comportent au moins une caméra (31,32) positionnée dans l'espace (23) entre les deux écrans (21,22).

7. Système selon l'une des revendications 1 à 6, **caractérisé en ce que** chaque écran de visualisation (21,22) est orienté verticalement et les moyens de traitement informatique (4) sont programmés pour effectuer une rotation de 90° de l'image d'un utilisateur acquise par les moyens d'acquisition vidéo (3).

8. Système selon l'une des revendications 1 à 7, **caractérisé en ce que** chaque écran de visualisation (21,22) peut également faire office de miroir.
